# EUROPEAN PATENT SPECIFICATION

(11) **EP 4 066 080 B1**
(45) Date of publication and mention of the grant of the patent: **01.04.2026**
(21) Application number: 21703420.6
(22) Date of filing: 03.02.2021
(51) Int. Cl.: G05D 1/00

(54) **METHOD FOR CONTROLLING A FORMATION OF A COLLABORATING SWARM OF UNMANNED MOBILE UNITS**
VERFAHREN ZUR STEUERUNG EINER BILDUNG EINES ZUSAMMENARBEITENDEN SCHWARMS UNBEMANNTER MOBILER EINHEITEN
PROCÉDÉ DE CONTRÔLE D'UNE FORMATION D'UN ESSAIM COLLABORANT D'UNITÉS MOBILES SANS PILOTE

(30) Priority: 10.03.2020 DE 102020203054
(43) Date of publication of application: 05.10.2022
(73) Proprietor: Airbus Defence and Space GmbH, 82024 Taufkirchen (DE)
(72) Inventor: PEREZ, Antonio, 82024 Taufkirchen (DE)
(74) Representative: Isarpatent
(86) International application number: PCT/EP2021/052519
(87) International publication number: WO 2021/180399

(56) References cited:
- WO-A1-2019/145936
- CN-A- 110 456 813
- US-A1- 2019 069 380

## Description

The present invention pertains to a method for controlling a formation of a collaborating swarm of unmanned mobile units. The invention particularly pertains to a method for controlling a flight formation of a swarm of drones. The invention further pertains to a collaborating swarm of a plurality of unmanned mobile units, in particular drones.

In the military and other technical fields, it has been increasingly proposed to use swarms or multi-agent systems consisting of semi or fully autonomous unmanned mobile units such as drones or other unmanned aircraft systems (UAS) for a wide variety of purposes ranging from surveillance and reconnaissance missions to tactical attack, see for example document EP 3 454 316 A1.

Algorithms for controlling a constellation and/or formation of such a swarm often assume that every member of the formation knows somehow the position of the other participants, especially when they are flying in a close or compact configuration. There are techniques available to fuse inputs from different sources for this purpose, comprising GPS or other global navigation satellite systems (GNSS), inertial navigation systems (INS), data links as well as optical sensors including cameras. However, in real-world deployment scenarios, a connection to such information sources may be suspended at least temporarily.

For example, GPS may be denied or a mission may take place at night or in stealth modus, that is, without radar, data link, radar altimeter and general intercommunication. In these cases, often only INS and electro optical sensors may be available and/or may provide any valuable data.

Typical computer vision algorithms for formation flight take some time to process video signals in order to identify other members of a formation and calculate their relative position. It is extremely difficult for common optical systems (cameras + algorithms) to provide precise measurements of vehicles flying at a speeds in the order of 100 m/s, in particular if a 360° coverage is demanded to guarantee collision-free flight in every direction around each mobile unit.

Document CN 110 456 813 A describes a system for swarm formation control, in which each drone is provided with a spherically shaped LED array for emitting UV light of three different wavelengths according to a "UV virtual potential field", wherein the drones are divided into clusters and the drones of each cluster are guided by the UV light of a respective guide drone.

Document US 2019/069380 A1 describes methods for operating mechatronic transforming luminaire swarms.

Document WO 2019/145936 A1 deals with proximity navigation of unmanned vehicles.

Against this background, it is an object of the present invention to find fast and robust solutions for formation control of swarms of unmanned mobile entities, which are particularly suited for scenarios with reduced visibility and data communication options.

This object is achieved by a method having the features of claim 1 and a swarm having the features of claim 9.

According to the invention, a method for controlling a formation of a collaborating swarm of unmanned mobile units, in particular for controlling a flight formation of a swarm of drones, comprises emitting infrared light as tracking signals by a plurality of signal emitters arranged on each mobile unit, wherein the signal emitters are distributed over each mobile unit in a geometric arrangement characteristic of the respective mobile unit, which as seen from another mobile unit forms a well-defined point pattern; detecting the tracking signals of at least adjacent mobile units within the swarm by a signal acquisition system of each mobile unit; determining a current relative position and/or a current orientation of the at least adjacent mobile units with respect to each mobile unit based on the point patterns, which are respectively defined by the detected tracking signals of the signal emitters on each of the at least adjacent mobile units; and steering each mobile unit based on the respectively determined current relative positions and/or current orientations of the at least adjacent mobile units to establish and/or maintain a specified formation of the swarm.

Further according to the invention, a collaborating swarm of a plurality of unmanned mobile units, in particular drones, is provided. Each mobile unit comprises a plurality of signal emitters arranged on the respective mobile unit, wherein the signal emitters are distributed over the mobile unit in a geometric arrangement characteristic of the respective mobile unit, which as seen from another mobile unit forms a well-defined point pattern, each signal emitter being configured to emit infrared light as tracking signals from its position on the mobile unit; a signal acquisition system configured to detect the tracking signals emitted from the other mobile units; a processing unit configured to determine a current relative position and/or a current orientation of at least adjacent mobile units within the swarm with respect to the respective mobile unit based on the point patterns, which are respectively defined by the tracking signals of the signal emitters on each of the at least adjacent mobile units; and a flight control system configured to steer the respective mobile unit based on the determined current relative positions and/or current orientations of the at least adjacent mobile units to establish and/or maintain a specified formation of the swarm.

Thus, one idea of the present invention is to make the system robust against conditions with poor visibility by locating signal emitters at pre-fixed, precisely defined locations on each mobile unit, which - as seen from a signal acquisition system mounted on another unit - form a well-defined point pattern that may be more easily processed by reconstruction algorithms (e.g. computer vision algorithms) since only a number of discrete points, and not a full image, have to be reconstructed and tracked.

The position of the emitters may be carefully selected at meaningful locations on the frame or body of the individual mobile units. In principle, it may thus be possible to create a unique pattern for each mobile entity. Using such information, plus data about size, shape and/or configuration of the respective entity where those emitters are mounted, computer vision algorithms can calculate position and/or orientation of any visible mobile unit based on the measured point pattern. The respective configurations of the signal emitters on each mobile unit may be provided as a data set to all units of the swarm before a mission, i.e. the geometric arrangements may be predefined, and/or may be communicated between the units during mission, e.g. via a communication network that may or may not be switched off at a later point during the mission. Emitter power may be set to a range so that only mobile units located within a certain predefined distance (for example 10 to 100 meters) may be able to detect the emitted signals.

Based on such a set of distributed emitters and sensors, relative position and/or orientation measurements may be carried out, which may serve as input for formation control algorithms and/or collision-avoidance algorithms, which may check at high frequency relative position, distance and/or orientation of any mobile entity in the vicinity of the respective mobile unit. These algorithms may then provide real time data to a flight control subsystem steering the respective mobile unit to uphold its relative position within the swarm formation. The algorithms may work in a reactive way and may not rely on any other information transmitted from the other mobile units (direct intercommunication, data link and so on). Consequently, the system avoids any potential conflict between position determined with pure image recognition algorithms (locally computed) and positions shared through data link messages (remotely computed).

An unmanned mobile unit within the meaning of the invention may in particular be a drone, the term drone designating a general unmanned aerial vehicle, i.e. an "Unmanned Aircraft System" (UAS) or "Unmanned Aerial Vehicle" (UAV). Drones in the sense of the invention include, inter alia, small drones, reconnaissance drones, but also combat drones and other unmanned military reconnaissance and/or combat aircraft. Drones within the meaning of the invention thus include, inter alia, "Micro Aerial Vehicles" (MAV), "Small Unmanned Aircraft" (SUA), Nano-, Micro- and Mini-UAS as well as Close- and Tactical-UAS, "Medium Altitude Long Endurance" (MALE) and "High Altitude Long Endurance" (HALE) UAS, "Unmanned Reconnaissance Aerial Vehicles" (URAV), "Unmanned Combat Aerial Vehicles" (UCAV) or "Unmanned Combat Aerial Systems (UCAS) and other unmanned aerial vehicles known to the person of skill.

In addition to unmanned aircraft, however, the term mobile unit according to the invention also includes other unmanned vehicles such as land vehicles, e.g. autonomous cars, watercraft, underwater vehicles, as well as general collaborating multi-agent systems or jointly operating formations of mobile units.

Advantageous embodiments and improvements of the present invention are found in the subordinate claims.

According to the invention, the signal emitters are configured to emit infrared light.

In one particular example, such signal emitters may be provided on the airframe of an unmanned aircraft, for example on wing tips, vertical stabilizer tip, horizontal stabilizer tips, nose, fuselage, belly fairing or any other distinct and/or discriminating position on the aircraft or more generally the mobile unit. Each signal emitter may be configured as a point-like source of emission signals such that the emitters in collaboration form a mesh or skeleton which is more easily processed by computer vision algorithms than the reconstruction of whole images.

Infrared light is not visible to the human eye and is basically not affected by bad lighting conditions (day/night, foggy, cloudy etc.). To differentiate between different mobile platforms, different combinations of such emitters may be activated, so that the pattern created by each subset may be unique. An infrared or high dynamic range camera may be mounted on the mobile units as part of the signal acquisition system to analyze the respective IR pattern emitted by the individual mobile units.

Generally, natural or other existing IR emitters, like engine exhaust nozzles, may be used as well by the algorithms to further support extraction of position and/or orientation. In this case, the signal acquisition system may be configured as an IR sensitive electro optical sensor and/or an IR or high dynamic range camera system.

According to an embodiment of the invention, the tracking signals may be pulsed and/or intensity modulated to encode transmission messages.

For example, light emitters have the capability to pulsate at a desired frequency or modulate intensity in order to transmit messages. On the other side, pulses or modulated signals are acquired by the sensors of the other units in the formation. Thus, for example, cameras and computer vision algorithms mounted on each unit may not only follow emitter patterns to calculate positions, but sense those pulsations and decode the messages as well. In that way, the present positioning system may at the same fulfill the purpose of a low-observable, short range communication system.

A particular emitter or subset of emitters (from zero to all of them) per unit can be set up as data emitter. Since every mobile unit in the formation knows the relative position of the others, or at least to the closest ones, an algorithm may assign which one(s) of the emitters available is the most suitable to act as communication emitter to transfer information to a particular unit. Different emitters on the same unit may send simultaneously different messages to different members of the formation, for example left and right.

According to an embodiment of the invention, each mobile unit may thus comprise a communication unit for data communication between the respective mobile unit and the other mobile units via the transmission messages encoded in the tracking signals.

According to an embodiment of the invention, the transmission messages may comprise an identification code particular to each respective mobile.

Apart from the unique emitter pattern mounted on each unit, the mobile platforms may thus identify themselves among the group with a specific transmission code, so that in particularly complex situations where identification is not possible through visual pattern (because of loss of electric power or any other malfunction that affects the emitter pattern), identification is still possible, as well as data transfer.

Communication among mobile units makes the system more robust and reinforces relative positioning techniques in cases where, for example, tagging of each member of the formation is mandatory for a specific maneuver.

For example, LEDs with different pulsation rates or codes may be used. This in addition would allow each mobile unit to have its own signature when emitting, which could be detected and assigned by the other units. To further differentiate between units, it may also be possible to activate different combinations of emitters.

According to an embodiment of the invention, the transmission messages may be used to communicate steering data between at least adjacent mobile units within the swarm.

A distributed communication net may be established, where information can be cascaded down in a chain from element to element, so that even if two units cannot see each other physically, communication between them may still be possible through a third one. Via this swarm communication network, steering data may be exchanged, which may, for example, contain control data for upholding and/or correcting a current or projected swarm formation.

Communication algorithms and protocols may take care that the information is transferred properly and arrives as fast and reliable as possible from one end to the other of the formation. A communication protocol may determine from which and to which mobile unit a message is directed and which actions need to be achieved.

This also opens up the possibility to provide a centralized command and control of the formation by one or several selected units of the swarm, which receive steering relevant data, e.g. results of relative position measurements, from the other units of the swarm and distribute corresponding steering commands to the rest of the swarm for adapting the formation accordingly. The steering data may be distributed directly between units. Alternatively or additionally, the steering data however may be also passed on from one unit to the other. In the latter case, only adjacent or close-by units need to establish a direct communication link.

It is to be understood however, that the swarm may additionally utilize different communication means depending on the mission scenario, e.g. a dedicated wireless swarm communication network (e.g. radio), and/or may be controlled by a (stationary) system control over a wireless system network.

According to an embodiment of the invention, the signal emitters may be configured to be operated to generate different signal patterns.

The signal emitters may be operated individually and/or independently of each other, e.g. switched on and off. However, the emitters may also be operated all together or jointly in fixed and/or changing subgroups. For example, to differentiate between mobile units, it may be possible to activate different combinations and/or subsets of emitters, so that the resulting pattern created by each subset may be unique. The signal pattern, and thus the detectable arrangement of the signal emitters, that is, the (sub-) set of active emitters, may hence be (re-) configurable while the geometric arrangement of the signal emitters on the mobile units, that is, their hardware configuration, may be fixed in advance. For example, it may be possible to turn individual signal emitters on and off and thus (re-) configure the resulting signal pattern before, after and/or even during operation. If, for example, a matrix of emitters is located on top of a body of a mobile unit, single emitters may be turned on or off to display completely different patterns/configurations, for example a full square, a ring, a "T", a "I", a "+" or any other suitable arrangement.

Both the geometric arrangement of the signal emitters as well as the actually detectable signal pattern of each mobile unit may be communicated to the other mobile units in advance and/or during mission. The geometric arrangement may be predefined while the signal pattern may be reconfigurable during mission. Also, both the (predefined) geometric arrangement of the signal emitters as well as the actually detected signal patterns (the tracking signals) may be used as input for the processing unit for the determination of the current relative position and/or a current orientation of at least adjacent mobile units within the swarm with respect to each mobile unit.

It is to be understood however that there may be a one-to-one correspondence between the geometric arrangement of the signal emitters and the detectable arrangement (the signal pattern) of active emitters if all installed signal emitters are configured to emit at the same time.

According to the invention, the processing unit is configured to extrapolate a projected trajectory of a hidden mobile unit of the mobile units based on the last determined current relative position of the hidden mobile unit in case the tracking signals of the hidden mobile unit are not received by the respective mobile unit at least temporarily.

Thus, a formation control algorithm and/or collision-avoidance algorithm may keep track of the positions measured between all visible mobile units and may extrapolate them if some units get occluded or hidden within the formation. In fact, assuming a realistic scenario, it is likely that not all members of the formation will be able to see each other, that is, detect each other at any time. Control algorithms may extrapolate the position of these other members based on current position and/or speed. If for some reason an evasive maneuver needs to be triggered, the algorithm may take into account the expected position of the non-visible members and may generate a maneuver that does not intersect their trajectories.

According to an embodiment of the invention, the formation of the swarm may be continuously updated by steering each mobile unit. The tracking signals may be evaluated by each mobile unit with a given refresh rate.

For example, under certain conditions, the tracking signals may be evaluated by each mobile unit with a refresh rate of at least several Hz, e.g. 2 Hz. However, the system may also be provided with much higher refresh rates.

Common computer vision algorithms for formation flight based on the reconstruction of whole images on the other hand take some time to process video signals in order to identify other members of the formation and calculate their relative position. For a vehicle flying at a typical speed in the order of 100 m/s, an optical system would need to run at 100 Hz to achieve an uncertainty in the order of meters. However, conventional optical airborne systems typically cannot even achieve such a frequency. This is particularly true in case of a single camera, e.g. if 360 degrees coverage is required to guarantee a collision-free flight all around the aircraft and thus multi-camera processing is mandatory. The present invention however opens up the possibility to reconstruct the positions and/or orientations at such high refresh rates because only a number of points, and not complete images, need to be reconstructed and/or tracked.

According to an embodiment of the invention, the signal acquisition system may comprise an electro optical sensor and/or a camera system. The signal acquisition system may particularly comprise an infrared camera.

Recently, micro cameras with fisheye lenses have been increasingly developed where a very small device is able to cover a wide angle around. Such lenses may keep the number of required cameras very low in order to have 360 degrees coverage around a mobile unit, e.g. an aircraft. In addition, those cameras may be easily integrated within the airframe of a flying platform. Conventional cameras and lenses may however be suitable as long as they can detect the particular wave length of the emitters. Combining an optimized positioning of the signal emitters and the respective cameras for signal acquisition, a continuous 360 degree camera coverage may be guaranteed around the platform.

Generally, signal emitter locations may be assigned an optimal position, such that the respective emitters are best visible and recognizable from other mobile units of the swarm and at the same time the least visible and recognizable from aircraft (airborne) or other (on the ground etc.) threats for the swarm.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated by the person of skill as they become better understood by reference to the following detailed description. The elements of the drawings are not necessarily to scale relative to each other. In the figures, like reference numerals denote like or functionally like components, unless indicated otherwise.
Fig. 1 schematically depicts an exemplary swarm of unmanned mobile units.
Fig. 2 schematically depicts a unmanned mobile unit according to an embodiment of the invention.
Fig. 3 schematically depicts a flow diagram of a method for controlling a formation of a collaborating swarm of unmanned mobile units as in Fig. 2.
Fig. 4 schematically depicts a unmanned mobile unit according to an embodiment of the invention.
Fig. 5 schematically depicts a geometric arrangement of signal emitters of the mobile unit of Fig. 4.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

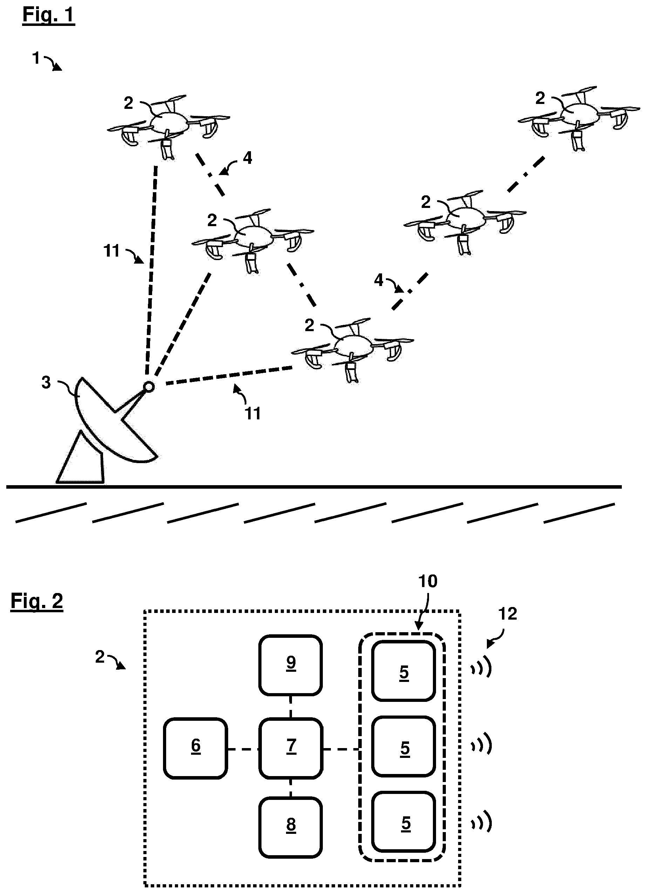

Figure 1 schematically depicts an exemplary collaborating swarm 1 of unmanned mobile units 2. In the concrete example of Fig. 1, the mobile units 2 are drones, each of which could be, for example, a small drone, a reconnaissance drone, a combat drone or another unmanned military aircraft or the like.

In principle, the swarm 1 may be used for various purposes, such as military operations including airborne reconnaissance and surveillance as well as tactical attack missions. The system could thus, for example, replace and/or complement corresponding conventional flying systems such as Airborne Early Warning and Control Systems (AWACS). For example, such a swarm could be used for battlefield reconnaissance or early detection of approaching missiles for self-protection of ships, buildings, etc. Since the failure of individual drones does not result in a system failure and the drones can be deployed quickly, combating the entire system is severely hampered.

In addition, however, such a drone system may also be used for non-military control and surveillance tasks, logistics and transport purposes, border surveillance, civil protection, research missions, etc.

The mobile units 2 form a collaborating, i.e. communicating and interacting, swarm 1, whereby the mobile units 2 form a specific flight formation at any given time, in which each mobile unit 2 is assigned a specific momentary position (and possibly velocity and/or acceleration) in three-dimensional space. In principle, a swarm 1 of such mobile units 2 can be commanded and controlled for this purpose by a central and optionally ground-based system control 3 via a corresponding wireless system network 11. However, such a centralized approach may be disadvantageous for applications in environments susceptible to connection failures or under highly dynamic conditions, e.g. in the case that a communication connection to the system network 11 is temporarily or permanently disturbed or completely interrupted.

To overcome these disadvantages, the mobile units 2 may also communicate via a dedicated swarm network 4, through which the mobile units 2 may communicate with each other in a decentralized manner and exchange control/steering commands to establish and/or uphold a certain formation configuration. However, in a typical battlefield scenario taking place in stealth modus and/or during night, data links and/or common intercommunication via conventional communication networks (e.g. radio) may be prohibited or at least severely restricted. Moreover, in these scenarios conventional camera systems and computer vision algorithms working in the optical spectrum may be useless and/or too slow, which otherwise could be used for mutual identification of the swarm units 2 and calculation of their relative positions in order to correct and/or adapt the swarm formation.

To overcome these and other drawbacks, the mobile units 2 of the present swarm 1 are configured as the one exemplarily shown in Fig. 2.

The mobile unit 2 in Fig. 2 comprises a plurality of signal emitters 5, which are arranged on the mobile unit 2, e.g. on an airframe or a body of the mobile unit 2. Here, the signal emitters 5 are distributed over the mobile unit 2 in a geometric arrangement 10 characteristic of the respective mobile unit 2. This means that the signal emitters 5 have a well-defined position and orientation so that also the distances between the individual signal emitters 5 are fixed in a pre-defined way. Each signal emitter is configured as an IR light emitter to emit infrared tracking signals 12 from its position on the mobile unit. The signal emitters 5 thus form a point-like pattern on the mobile unit 2, which is characteristic of the particular mobile unit 2 and whose appearance depends on the perspective from which the mobile unit 2 is visible to an observer.

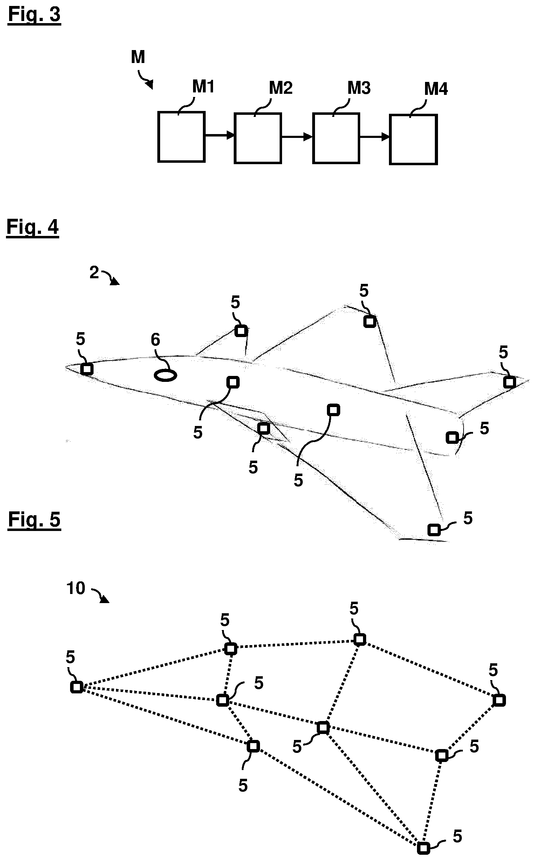

As an example, Fig. 4 shows an airborne mobile unit 2, which has several signal emitters 5 distributed over its airframe. The signal emitters 5 may, for example, be placed on wing tips, vertical stabilizer tip, horizontal stabilizer tips, nose, fuselage, belly fairing or any other distinct and/or discriminating position on the mobile unit 2.

Fig. 5 shows the geometric arrangement 10 characteristic of the respective mobile unit 2 of Fig. 4. As can be seen, the signal emitters 5 form a characteristic point pattern, which will change for an observer when the orientation and/or position of the mobile unit 2 changes with respect to the observer (e.g. another mobile unit 2). However, the inherent arrangement of the signal emitters 5 stays the same. Thus, by detecting and analyzing IR or other light emitted from the signal emitters 5, a current relative position and a current orientation of the mobile unit 2 with respect to an observing unit 2 can be reconstructed based on the knowledge of the geometric arrangement 10 of the signal emitters 5 (which is fixed and does not change with the perspective).

The signal emitters 5 may be configured to be operated to generate different signal patterns, which means that only some of the signal emitters 5 may be emitting at the same time and that the actually emitted light pattern of actively emitting signal emitters 5 may be reconfigured during mission while the hardware configuration of the signal emitters 5 stays the same. For example, using different unique signal patterns it may be possible to distinguish otherwise identical mobile units 2 (which also have identical geometric arrangements of signal emitters 5). It is to be understood however that also all installed signal emitters 5 may emit tracking signals all together such that the signal pattern may directly reflect the actual hardware arrangement of the signal emitters 5, that is, the geometric arrangement 10.

To detect tracking signals of the other mobile units 2, the mobile unit 2 in Fig. 2 (also the one in Fig. 4) comprises a signal acquisition system 6 configured as an IR or high dynamic range camera system to detect the tracking signals 12 emitted from the other mobile units 2. The signal acquisition system 6 may provide coverage for all possible solid angles around the respective unit 2.

Further, the mobile unit 2 comprises a processing unit 7 configured to determine a current relative position and/or a current orientation of at least adjacent mobile units 2 within the swarm 1 with respect to the respective mobile unit 2 based on the tracking signals 12 and the geometric arrangement 10 of the signal emitters 5 of the at least adjacent mobile units 2.

Thus, each mobile unit 2 is able to estimate current relative position (and thus distance) as well as current orientation of the other mobile units 2, or at least of mobile units 2 that are close-by and visible for the respective mobile unit 2. It will be clear to the person of skill that based on a variation of the position and orientation in time, also relative velocities and thus accelerations may be determined between the units 2.

Based on the determined current relative positions and/or current orientations of the at least adjacent mobile units 2, a flight control system 8 of the respective mobile unit 2 (cf. Fig. 2) may steer the respective mobile unit 2 to establish and/or maintain a specified formation of the swarm 1.

In addition, the tracking signals 12 may be used to establish a communication channel between the mobile units 2. To this end, at least one of the signal emitters 5 of each mobile unit 2 may further be configured to emit tracking signals 12 that are pulsed and/or intensity modulated to encode transmission messages. The tracking signals 12 may thus not only be used as "beacons" for measuring relative positions and orientations, and thus the physical shape of the swarm 1, but also to communicate data, e.g. steering data, between the members of the swarm 1. The transmission messages may comprise an identification code particular to each respective mobile unit 2 so that each mobile unit 2 may be identified by its identification code.

For the case that the tracking signals 12 of one or several mobile units 2 are not received by a mobile unit 2 at least temporarily, that is, the respective mobile units 2 are "hidden" or occluded, the processing unit 7 may further be configured to extrapolate a projected trajectory of such a hidden mobile unit 2 based on the last determined current relative position of the hidden mobile unit 2.

The swarm 1 thus can not only keep track of the positions measured between all units, but can also extrapolate them if some units get occluded or hidden within the formation. Thus, the swarm can actively control its formation and hence can avoid collisions between its members (but also with other aircraft or general vehicles). For example, if for some reason an evasive maneuver needs to be triggered, the swarm may take into account the known position of visible members and the expected position of the non-visible members and may generate a maneuver that does not intersect their trajectories and those of other aircraft or objects and other obstructions.

The formation of the swarm 1 can be updated continuously by steering each mobile unit 2 accordingly. The complexity of the reconstruction procedure for the positions/orientations of the mobile units 2 is significantly reduced in comparison to conventional systems based on image reconstruction, as only the point patterns of the signal emitters 5 need to be considered. Thus the tracking signals 12 may be evaluated by each mobile unit 2 with a refresh rate of several Hz or more.

Fig. 3 shows a flow diagram of a corresponding method for controlling the formation of the collaborating swarm 1 of unmanned mobile units 2. The method M comprises under M1 emitting tracking signals 12 by the plurality of signal emitters 5 arranged on each mobile unit 2. The method M further comprises under M2 detecting the tracking signals 12 of at least adjacent mobile units 2 within the swarm 1 by the signal acquisition system 6 of each mobile unit 2. The method M further comprises under M3 determining the current relative position and/or the current orientation of the at least adjacent mobile units 2 with respect to each mobile unit 2 based on the detected tracking signals 12 and the geometric arrangements 10 of the signal emitters 5 on the at least adjacent mobile units. The method M further comprises under M4 steering each mobile unit 2 based on the respectively determined current relative positions and/or current orientations of the at least adjacent mobile units 2 to establish and/or maintain a specified formation of the swarm.

In sum, IR or other light emitters, computer vision algorithms, collision avoidance algorithms, flight dynamics, trajectory extrapolation algorithms and airborne cameras are combined to provide amongst others the following benefits under extreme mission conditions (i.e. denied GPS environment, no radio communication, no data link, low visibility weather, stealth requirements):
- relative position and velocity measurement among a formation of mobile units/drones,
- robust collision-avoidance capabilities,
- IR light emission-based communication between formation members,
- implementation of autonomous planning algorithms, which consider the formation as a whole, and not just as a collection of independent units,
- centralized and/or decentralized command and control of the formation from one or several elements,
- generation of trajectories for the whole formation as a group, thereby taking into account particular capabilities of each individual element at any time under extreme conditions of low visibility and suppressed radio communications.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### List of reference signs

- 1: swarm of unmanned mobile units/drones
- 2: unmanned mobile unit/drone
- 3: system control
- 4: swarm network
- 5: signal emitter
- 6: signal acquisition system
- 7: processing unit
- 8: flight control system
- 9: communication unit
- 10: geometric arrangement
- 11: system network
- 12: tracking signals
- M: method
- M1-M4: method steps

## Claims

1. Method for controlling a formation of a collaborating swarm (1) of unmanned mobile units (2), in particular a flight formation of a swarm (1) of drones, the method (M) comprising:
emitting (M1) infrared light as tracking signals (12) by a plurality of signal emitters (5) arranged on each mobile unit (2), wherein the signal emitters (5) are distributed over each mobile unit (2) in a geometric arrangement (10) characteristic of the respective mobile unit (2), which as seen from another mobile unit (2) forms a well-defined point pattern;
detecting (M2) the tracking signals (12) of at least adjacent mobile units (2) within the swarm (1) by a signal acquisition system (6) of each mobile unit (2);
determining (M3) a current relative position and/or a current orientation of the at least adjacent mobile units (2) with respect to each mobile unit (2) based on the point patterns, which are respectively defined by the detected tracking signals (12) of the signal emitters (5) on each of the at least adjacent mobile units (2); and
steering (M4) each mobile unit (2) based on the respectively determined current relative positions and/or current orientations of the at least adjacent mobile units (2) to establish and/or maintain a specified formation of the swarm (1);
wherein a projected trajectory of a hidden mobile unit (2) of the mobile units (2) is extrapolated based on the last determined current relative position of the hidden mobile unit (2) in case the tracking signals (12) of the hidden mobile unit (2) are not received by the other mobile units (2) at least temporarily.

2. Method (M) according to claim 1, wherein the tracking signals (12) are at least one of pulsed and intensity modulated to encode transmission messages.

3. Method (M) according to claim 2, wherein the transmission messages comprise an identification code particular to each respective mobile unit (2).

4. Method (M) according to one of the claims 2 and 3, wherein the transmission messages are used to communicate steering data between at least adjacent mobile units (2) within the swarm (1).

5. Method (M) according to one of the claims 1 to 4, wherein the signal emitters (3) are operated to generate different signal patterns.

6. Method (M) according to one of the claims 1 to 5, wherein the formation of the swarm (1) is continuously updated by steering each mobile unit (2), wherein the tracking signals (12) are evaluated by each mobile unit (2) with a given refresh rate.

7. Collaborating swarm (1) of a plurality of unmanned mobile units (2), in particular drones, each mobile unit (2) comprising:
a plurality of signal emitters (5) arranged on the respective mobile unit (2),
wherein the signal emitters (5) are distributed over the mobile unit (2) in a geometric arrangement (10) characteristic of the respective mobile unit (2), which as seen from another mobile unit (2) forms a well-defined point pattern, each signal emitter being configured to emit infrared light as tracking signals (12) from its position on the mobile unit (2);
a signal acquisition system (6) configured to detect the tracking signals (12) emitted from the other mobile units (2);
a processing unit (7) configured to determine a current relative position and/or a current orientation of at least adjacent mobile units (2) within the swarm (1) with respect to the respective mobile unit (2) based on the point patterns, which are respectively defined by the detected tracking signals (12) of the signal emitters (5) on each of the at least adjacent mobile units (2); and
a flight control system (8) configured to steer the respective mobile unit (2) based on the determined current relative positions and/or current orientations of the at least adjacent mobile units (2) to establish and/or maintain a specified formation of the swarm (1);
wherein the processing unit (7) is configured to extrapolate a projected trajectory of a hidden mobile unit (2) of the mobile units (2) based on the last determined current relative position of the hidden mobile unit (2) in case the tracking signals (12) of the hidden mobile unit (2) are not received by the respective mobile unit (2) at least temporarily.

8. Swarm according to claim 7, wherein the signal emitters (5) are configured to emit tracking signals (12) that are at least one of pulsed and intensity modulated to encode transmission messages.

9. Swarm according to claim 8, wherein the transmission messages comprise an identification code particular to each respective mobile unit (2).

10. Swarm according to one of the claims 8 and 9, further comprising:
a communication unit (9) for data communication between the respective mobile unit (2) and the other mobile units (2) via the transmission messages encoded in the tracking signals (12).

11. Swarm according to one of the claims 7 to 10, wherein the signal emitters (3) are configured to be operated to generate different signal patterns.

12. Swarm according to one of the claims 7 to 11, wherein the signal acquisition system (6) comprises at least one of an electro optical sensor and a camera system, in particular an infrared camera.

## Patentansprüche

1. Verfahren zum Steuern einer Formation eines zusammenarbeitenden Schwarms (1) unbemannter mobiler Einheiten (2), insbesondere einer Flugformation eines Schwarms (1) von Drohnen, wobei das Verfahren (M) Folgendes umfasst:
Emittieren (M1) von Infrarotlicht als Verfolgungssignale (12) durch eine Vielzahl von Signalemittern (5), die auf jeder mobilen Einheit (2) angeordnet sind, wobei die Signalemitter (5) über jede mobile Einheit (2) in einer geometrischen Anordnung (10), die für die jeweilige mobile Einheit (2) charakteristisch ist, verteilt sind, die, von einer anderen mobilen Einheit (2) aus gesehen, ein gut definiertes Punktmuster bildet;
Detektieren (M2) der Verfolgungssignale (12) von mindestens benachbarten mobilen Einheiten (2) innerhalb des Schwarms (1) durch ein Signalerfassungssystem (6) jeder mobilen Einheit (2);
Bestimmen (M3) einer aktuellen relativen Position und/oder einer aktuellen Orientierung der mindestens benachbarten mobilen Einheiten (2) in Bezug auf jede mobile Einheit (2) basierend auf den Punktmustern, die jeweils durch die detektierten Verfolgungssignale (12) der Signalemitter (5) auf jeder der mindestens benachbarten mobilen Einheiten (2) definiert sind; und
Lenken (M4) jeder mobilen Einheit (2) basierend auf den jeweils bestimmten aktuellen relativen Positionen und/oder aktuellen Orientierungen der mindestens benachbarten mobilen Einheiten (2), um eine spezifizierte Formation des Schwarms (1) zu etablieren und/oder aufrechtzuerhalten;
wobei eine projizierte Trajektorie einer verborgenen mobilen Einheit (2) der mobilen Einheiten (2) basierend auf der zuletzt bestimmten aktuellen relativen Position der verborgenen mobilen Einheit (2) extrapoliert wird, falls die Verfolgungssignale (12) der verborgenen mobilen Einheit (2) nicht durch die anderen mobilen Einheiten (2) zumindest vorübergehend empfangen werden.

2. Verfahren (M) nach Anspruch 1, wobei die Verfolgungssignale (12) gepulst und/oder intensitätsmoduliert sind, um Übertragungsnachrichten zu codieren.

3. Verfahren (M) nach Anspruch 2, wobei die Übertragungsnachrichten einen Identifikationscode umfassen, der für jede jeweilige Mobileinheit (2) spezifisch ist.

4. Verfahren (M) nach einem der Ansprüche 2 und 3, wobei die Übertragungsnachrichten verwendet werden, um Lenkdaten zwischen mindestens benachbarten Mobileinheiten (2) innerhalb des Schwarms (1) zu kommunizieren.

5. Verfahren (M) nach einem der Ansprüche 1 bis 4, wobei die Signalemitter (3) betrieben werden, um unterschiedliche Signalmuster zu erzeugen.

6. Verfahren (M) nach einem der Ansprüche 1 bis 5, wobei die Formation des Schwarms (1) kontinuierlich aktualisiert wird, indem jede mobile Einheit (2) gelenkt wird, wobei die Verfolgungssignale (12) durch jede mobile Einheit (2) mit einer gegebenen Auffrischungsrate ausgewertet werden.

7. Zusammenarbeitender Schwarm (1) aus einer Vielzahl von unbemannten mobilen Einheiten (2), insbesondere Drohnen, wobei jede mobile Einheit (2) Folgendes umfasst:
eine Vielzahl von Signalemittern (5), die auf der jeweiligen mobilen Einheit (2) angeordnet sind, wobei die Signalemitter (5) in einer geometrischen Anordnung (10), die für die jeweilige mobile Einheit (2) charakteristisch ist, über die mobile Einheit (2) verteilt sind, die, von einer anderen mobilen Einheit (2) aus gesehen, ein gut definiertes Punktmuster bildet, wobei jeder Signalemitter dazu ausgelegt ist, Infrarotlicht als Verfolgungssignale (12) von seiner Position auf der mobilen Einheit (2) zu emittieren;
ein Signalerfassungssystem (6), das dazu ausgelegt ist, die Verfolgungssignale (12) zu detektieren, die von den anderen mobilen Einheiten (2) emittiert werden;
eine Verarbeitungseinheit (7), die dazu ausgelegt ist, eine aktuelle relative Position und/oder eine aktuelle Orientierung von mindestens benachbarten mobilen Einheiten (2) innerhalb des Schwarms (1) in Bezug auf die jeweilige mobile Einheit (2) basierend auf den Punktmustern zu bestimmen, die jeweils durch die detektierten Verfolgungssignale (12) der Signalemitter (5) auf jeder der mindestens benachbarten mobilen Einheiten (2) definiert sind; und
ein Flugsteuerungssystem (8), das dazu ausgelegt ist, die jeweilige mobile Einheit (2) basierend auf den bestimmten aktuellen relativen Positionen und/oder aktuellen Orientierungen der mindestens benachbarten mobilen Einheiten (2) zu lenken, um eine spezifizierte Formation des Schwarms (1) zu etablieren und/oder aufrechtzuerhalten;
wobei die Verarbeitungseinheit (7) dazu ausgelegt ist, eine projizierte Trajektorie einer verborgenen mobilen Einheit (2) der mobilen Einheiten (2) basierend auf der zuletzt bestimmten aktuellen relativen Position der verborgenen mobilen Einheit (2) zu extrapolieren, falls die Verfolgungssignale (12) der verborgenen mobilen Einheit (2) nicht mindestens vorübergehend durch die jeweilige mobile Einheit (2) empfangen werden.

8. Schwarm nach Anspruch 7, wobei die Signalemitter (5) dazu ausgelegt sind, Verfolgungssignale (12) zu emittieren, die gepulst und/oder intensitätsmoduliert sind, um Übertragungsnachrichten zu codieren.

9. Schwarm nach Anspruch 8, wobei die Übertragungsnachrichten einen Identifikationscode umfassen, der für jede jeweilige mobile Einheit (2) spezifisch ist.

10. Schwarm nach einem der Ansprüche 8 und 9, der ferner Folgendes umfasst:
eine Kommunikationseinheit (9) zur Datenkommunikation zwischen der jeweiligen mobilen Einheit (2) und den anderen mobilen Einheiten (2) über die in den Verfolgungssignalen (12) codierten Übertragungsnachrichten.

11. Schwarm nach einem der Ansprüche 7 bis 10, wobei die Signalemitter (3) dazu ausgelegt sind, betrieben zu werden, um unterschiedliche Signalmuster zu erzeugen.

12. Schwarm nach einem der Ansprüche 7 bis 11, wobei das Signalerfassungssystem (6) einen elektrooptischen Sensor und/oder ein Kamerasystem, insbesondere eine Infrarotkamera, umfasst.

## Revendications

1. Procédé de commande d'une formation d'un essaim collaboratif (1) d'unités mobiles sans pilote (2), en particulier d'une formation en vol d'un essaim (1) de drones, le procédé (M) comprenant :
l'émission (M1) de lumière infrarouge sous forme de signaux de suivi (12) par une pluralité d'émetteurs de signaux (5) agencés sur chaque unité mobile (2), les émetteurs de signaux (5) étant répartis sur chaque unité mobile (2) selon un agencement géométrique (10) caractéristique de l'unité mobile (2) respective, qui, vu depuis une autre unité mobile (2), forme un motif de points bien défini ;
la détection (M2) des signaux de suivi (12) d'unités mobiles (2) au moins adjacentes au sein de l'essaim (1) par un système d'acquisition de signaux (6) de chaque unité mobile (2) ;
la détermination (M3) d'une position relative courante et/ou d'une orientation courante d'unités mobiles (2) au moins adjacentes par rapport à chaque unité mobile (2) sur la base des motifs de points, qui sont définis respectivement par les signaux de suivi (12) détectés des émetteurs de signaux (5) sur chacune des unités mobiles (2) au moins adjacentes ; et
le pilotage (M4) de chaque unité mobile (2) sur la base des positions relatives courantes et/ou des orientations courantes respectivement déterminées des unités mobiles (2) au moins adjacentes afin d'établir et/ou de maintenir une formation spécifiée de l'essaim (1) ;
dans lequel une trajectoire projetée d'une unité mobile (2) cachée des unités mobiles (2) est extrapolée sur la base de la dernière position relative courante déterminée de l'unité mobile (2) cachée dans le cas où les signaux de suivi (12) de l'unité mobile (2) cachée ne sont pas reçus par les autres unités mobiles (2) au moins temporairement.

2. Procédé (M) selon la revendication 1, dans lequel les signaux de suivi (12) sont pulsés et/ou modulés en intensité afin de coder des messages de transmission.

3. Procédé (M) selon la revendication 2, dans lequel les messages de transmission comprennent un code d'identification propre à chaque unité mobile (2) respective.

4. Procédé (M) selon l'une des revendications 2 et 3, dans lequel les messages de transmission sont utilisés pour communiquer des données de pilotage entre des unités mobiles (2) au moins adjacentes au sein de l'essaim (1).

5. Procédé (M) selon l'une des revendications 1 à 4, dans lequel les émetteurs de signaux (3) sont activés afin de générer des motifs de signaux différents.

6. Procédé (M) selon l'une des revendications 1 à 5, dans lequel la formation de l'essaim (1) est continuellement mise à jour par le pilotage de chaque unité mobile (2), les signaux de suivi (12) étant évalués par chaque unité mobile (2) avec une fréquence de rafraîchissement donnée.

7. Essaim collaboratif (1) d'une pluralité d'unités mobiles sans pilote (2), en particulier de drones, chaque unité mobile (2) comprenant :
une pluralité d'émetteurs de signaux (5) agencés sur l'unité mobile (2) respective, les émetteurs de signaux (5) étant répartis sur l'unité mobile (2) selon un agencement géométrique (10) caractéristique de l'unité mobile (2) respective, qui, vu depuis une autre unité mobile (2), forme un motif de points bien défini, chaque émetteur de signaux étant configuré pour émettre de la lumière infrarouge sous forme de signaux de suivi (12) depuis sa position sur l'unité mobile (2) ;
un système d'acquisition de signaux (6) configuré pour détecter les signaux de suivi (12) émis depuis les autres unités mobiles (2) ;
une unité de traitement (7) configurée pour déterminer une position relative courante et/ou une orientation courante d'unités mobiles (2) au moins adjacentes au sein de l'essaim (1) par rapport à l'unité mobile (2) respective sur la base des motifs de points, qui sont définis respectivement par les signaux de suivi (12) détectés des émetteurs de signaux (5) sur chacune des unités mobiles (2) au moins adjacentes ; et
un système de commande de vol (8) configuré pour piloter l'unité mobile (2) respective sur la base des positions relatives courantes et/ou des orientations courantes déterminées des unités mobiles (2) au moins adjacentes afin d'établir et/ou de maintenir une formation spécifiée de l'essaim (1) ;
dans lequel l'unité de traitement (7) est configurée pour extrapoler une trajectoire projetée d'une unité mobile (2) cachée des unités mobiles (2) sur la base de la dernière position relative courante déterminée de l'unité mobile (2) cachée dans le cas où les signaux de suivi (12) de l'unité mobile (2) cachée ne sont pas reçus par l'unité mobile (2) respective au moins temporairement.

8. Essaim selon la revendication 7, dans lequel les émetteurs de signaux (5) sont configurés pour émettre des signaux de suivi (12) qui sont pulsés et/ou modulés en intensité afin de coder des messages de transmission.

9. Essaim selon la revendication 8, dans lequel les messages de transmission comprennent un code d'identification propre à chaque unité mobile (2) respective.

10. Essaim selon l'une des revendications 8 et 9, comprenant en outre :
une unité de communication (9) pour la communication de données entre l'unité mobile (2) respective et les autres unités mobiles (2) via les messages de transmission codés dans les signaux de suivi (12).

11. Essaim selon l'une des revendications 7 à 10, dans lequel les émetteurs de signaux (3) sont configurés pour être activés afin de générer des motifs de signaux différents.

12. Essaim selon l'une des revendications 7 à 11, dans lequel le système d'acquisition de signaux (6) comprend un capteur électro-optique et/ou un système de caméra, en particulier une caméra infrarouge.
